(19) Europäisches Patentamt

European Patent Office

Office européen des brevets

(11) **EP 1 708 390 A1**

(12) **EUROPEAN PATENT APPLICATION**

(43) Date of publication:
    **04.10.2006 Bulletin 2006/40**

(51) Int Cl.:
    **H04B 10/18** (2006.01)

(21) Application number: **05075754.1**

(22) Date of filing: **31.03.2005**

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(71) Applicant: **Corning Incorporated
    Corning, NY 14831 (US)**

(72) Inventor: **Ellis, Andrew
    Nr Bandon, County Cork (IE)**

(74) Representative: **Boon, Graham Anthony
    Elkington and Fife LLP,
    Prospect House,
    8 Pembroke Road
    Sevenoaks,
    Kent TN13 1XR (GB)**

(54) **Mitigating the effect of pulse distortions along an optical fiber communications link**

(57)    A method of mitigating the effect of deterministic (only slowly changing) pulse distortions along an optical fiber communications link transmitting a train of pulses, and apparatus for performing it. Plural copies of the pulse train are made and are all coherently added together with the original train after delaying each copy by a different amount. The amplitude and phase of each copy are independently adjusted, normally by a computer, to optimize the resulting pulse shape. The technique is capable of mitigating (not totally eliminating) distortions of diverse origin, including but not limited to polarization mode dispersion, chromatic dispersion, multiple reflections, and self-phase modulation, even if they interact with each other.

FIG. 11

## Description

## BACKGROUND OF THE INVENTION

### FIELD OF THE INVENTION

The present invention relates generally to a method of mitigating the effect of pulse distortions in a digital optical fiber communications link and to apparatus for implementing the method. More specifically, it relates to the mitigation of distortions that are deterministic in the sense that they are substantially the same as between one pulse and the next, though they may and almost always will vary significantly on a longer time-scale.

### TECHNICAL BACKGROUND

Such deterministic distortions arise from a number of distinct and in some cases interacting causes, of which the most significant are usually polarization mode dispersion (PMD), chromatic or group-delay or group-velocity dispersion (GVD) self-phase modulation (SPM) and multiple reflections (MRN).

Such distortions accumulate along the transmission path, and can eventually reach a level at which there begins to be an unacceptable risk of bit errors, compelling regeneration of the pulses. Conventional techniques for extending the path length have mostly been specific to one source of distortion: as for example, chromatic dispersion may be countered by the use of an appropriate length of fiber whose dispersion is opposite in sign to that of the main transmission fiber (dispersion-compensating fiber, DCF), and this may require several different treatments in succession, and may still fail if the distortions from different sources are interacting.

There is thus a need for a simple technique for mitigating distortion that is independent of the specific source or sources from which the distortion has arisen.

## SUMMARY OF THE INVENTION

One aspect of the invention is a method of mitigating the effect of deterministic pulse distortions along an optical fiber communications link transmitting a train of pulses which comprises, at at least one point of the link, making plural copies of said pulse train, delaying each said copy by a different amount, coherently adding said copies to said pulse train, and adjusting the amplitude and phase of each said copy to optimize the resulting pulse shape.

In another aspect, phase adjusting means are included and may be selected from thermo-optical and electro-optical phase shifters and modulators or may be an electrically pumped semiconductor device.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

## BRIEF DESCRIPTION OF THE DRAWINGS

FIGS. 1-10 are traces of optical signal pulses to illustrate the method of the invention; and

FIG. 11 is a schematic diagram of one form of apparatus in accordance with the invention;

FIG. 12 is a diagrammatic representation of one practical form of the apparatus of the invention; and

FIGS. 13-15 are traces of optical signal pulses to illustrate a practical example.

## DETAILED DESCRIPTION OF THE PREFERRED EMBODIMENTS

Reference will now be made in detail to the present preferred embodiment(s) of the invention, examples of which are illustrated in the accompanying drawings. Whenever possible, the same reference numerals will be used throughout the drawings to refer to the same or like parts.

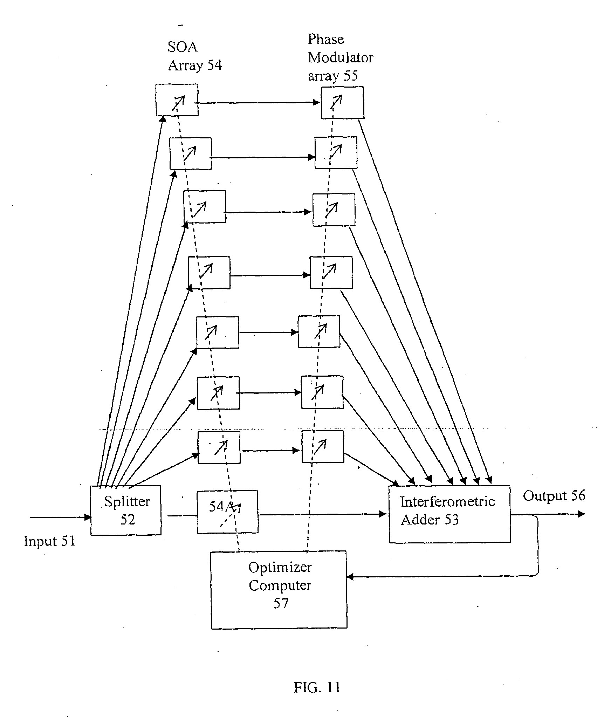

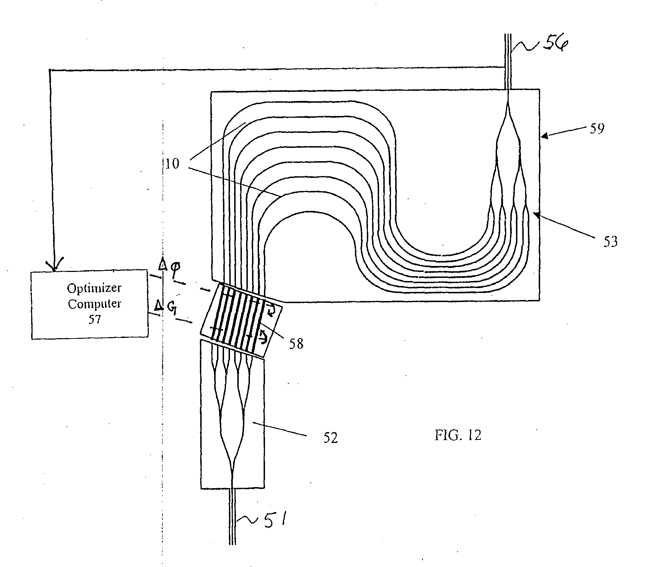

Referring to FIGS. 11 or 12, an all-optical homodyne distortion compensator is shown. An input optical fiber 51 receives a modulated carrier signal having a distorted pulse train which resulted from propagation of the modulated carrier signal through an optical link. A first plurality of beam steering elements and couplers 52 split the distorted pulse train of the modulated carrier signal into multiple fractions or copies for guided or unguided propagation in waveguides or other beam steering elements, respectively. A parallel array of adaptive amplitude and phase controls 54 or 58 provide adjustable amplitude and phase of each of the copies of the distorted modulated carrier signal. A parallel configuration of incrementally delayed lines 10 starting from an undelayed path couple the first plurality of beam steering elements and couplers 52 to the parallel array of adaptive amplitude and phase controls 54 or 58. The delayed lines or taps 10 have an increment time delay between the lines of a predetermined percentage of the pulse length of the modulated carrier signal for incrementally delaying the amplitude adjustable and phase adjustable copies or split distorted pulse train of the modulated carrier. A second plurality of beam steering elements and couplers 53 interferometrically combines the optical fields of the amplitude adjustable and phase adjustable delayed copies and the undelayed copy of the split distorted pulse train of the modulated carrier as an output signal. A computer 57 controlled by a finite impulse response (FIR) algorithm chosen to optimize the pulse shape resulting from the optical field addition of the copies to the undelayed fraction of the pulse train of the modulated carrier by controlling the parallel array of amplitude and phase elements in response to a feedback control portion of the output signal. An output fiber 56 couples the output signal as a restored version of the modulated carrier signal with the optimized pulse shape having distortion mitigated.

FIG. 12 shows one practical layout for the all-optical homodyne distortion compensator, using a compact integrated SOA/phase modulator array 58 as the parallel array of adaptive amplitude and phase controls. The first plurality of beam steering elements and couplers is formed by a planar silica passive splitter as the splitter 2 coupling one waveguide into eight waveguides, as an example. The second plurality of beam steering elements and couplers is provided by a combiner having an input for coupling eight waveguides and an output as an interferometric adder 53. The adder 53 and the delay lines 10, coupled together, are formed on a second planar silica chip 59. The interferometric addition takes place at the output of the combiner where the optical fields are summed at this point.

The chip 59 used in the example of FIG 12 is an existing design for a different purpose; different layouts are possible, and in particular it may be more efficient in many cases to design the delay lines as nesting U-shapes rather than S-shapes. Hence, an appropriate configuration of beam steering elements provide unguided or guided light propagation. Actual implementation could differ in the arrangement and type of couplers for joining the waveguides, and may not even use waveguides, but unguided propagation with an appropriate configuration of beam steering elements.

According to the teachings of the invention, the method used by the all-optical homodyne distortion compensator is related to the technique of filtering by Finite Impulse Response (FIR). Electrical FIR or pulse electronics requires the subtraction of information signals, but this is not possible optically because light can not be negative.

Hence, the inventive adaptive use of phase adjustment made possible by coherent addition in the optical domain gives an extra degree of freedom enabling more effective pulse re-shaping. By using multiple copies of the input signal and processing them in parallel with the inventive adaptive phase control, the method of the present invention can be performed with lower losses and in a more compact device. It is also more flexible, for example it is able to use an odd or even number of copies and provide either a symmetrical response or an unsymmetrical one.

Applicant acknowledges that this method is in principle as well as in practice not capable of completely removing all distortion, but it is nevertheless capable of significantly reducing the amount of distortion and redistributing the residual distortion so that its effect on bit error rate is diminished, thereby usefully extending the range beyond which full regeneration of the pulses by conventional means becomes necessary.

Except perhaps in very special circumstances, it will not be possible to predict the magnitudes and phases that will need to be applied to each of the copies of the signal to secure optimum (or even effective) operation: they will need to be determined by a routine trial and error process, which will often need to go through multiple iterations. Since they are likely to be time-variant, the process will usually need to be repeated at appropriate intervals or continually. Preferably the apparatus includes a computer (which term is to be understood as including any microprocessor and any analogue control loop) controlled by an algorithm chosen to perform this operation, but in very simple cases a manual pre-set adjustment may be sufficient.

Preferably the delay times associated with the copies are related by a constant increment, but other relationships (for example a linearly, logarithmically, geometrically or exponentially increasing length, arbitrary values or values related to a specific known or predicted distortion) is not excluded. In most cases, it is preferred that the increments (whether equal or not) are less than the pulse length of the incoming train, but not less than 10% of the pulse length. In principle, the lengths of the delays may also be adjusted to further optimize the result, but this is difficult to implement and is not currently thought worthwhile.

Mathematically representing the present invention, the parallel array of adaptive amplitude and phase controls 54 or 58 have variable Gain $g_n$, and Phase $\phi_n$ where $g_n$ varies from 0 to infinity. The parallel configuration of incrementally delayed lines 10 has an incremental delay time of $\tau_n$. The carrier field at the input $E_{in}(t)$ has no offset value, and the signal detected at the end of the communication link is proportional to the square of the field,

$$P_{out}(t) = \left| \sum_n g_n E_{in}(t - \tau_n) e^{i\phi_n} \right|^2$$

where the optical output field at the output of the combiner or adder 53 is then

$$E_{out}(t) = \sum_n g_n E_{in}(t - \tau_n) e^{i\phi_n}$$

In operation, the optical signal received on the input fiber 51 consists of a carrier signal, for example, operating at a frequency in the 200 THz region which is modulated with the information being carried. The information may be represented by modulating the amplitude of the carrier (between 0 and 1), or its phase, (between 0 and $2\pi$, or $-\pi$ and $\pi$), or its frequency. The carrier field has no offset value, and the detected signal is proportional to the square of the field. When two copies of a signal are added together, with a delay time of the order of the characteristic time of the information, for example a few picoseconds, two modulated carriers are actually added together, rather than adding the two copies of the information, and then adding the sum of the two copies of the information to the carriers. The actual delay, to an accuracy of 10 fs (for 200 THz) determines the values of the carrier fields which are being added together. If both carrier signals are in the positive (or equally negative) parts of their cycle, the information signal amplitude will increase (constructive interference), and an impression is obtained that the copies of the information have been added to a certain degree. However, if one copy is on the negative part of the cycle, and the other on the positive cycle (equally vice versa), the information signal amplitude decreases, and the impression is obtained that the two copies of the information signals have been subtracted.

Hence, the interferometric addition of optical phase (adding fields, not powers as in the time-domain digital FIR case) in a fully parallel approach is achieved to provide the necessary "subtraction" for a full optical FIR filter overcoming the absence of negative optical amplitudes. Thus, more than two paths of an interferometer or multiple interferometers are cascaded in parallel to transform an unknown degraded signal into a signal with largely restored characteristics. At least three parallel delayed paths with adjustable amplitude and phase controls used for distortion compensation are utilized in the all-optical (optical in to optical out) homodyne distortion compensator where split copies of the modulated carrier from multiple parallel delayed paths of the same frequency interfere. Restoration of a signal in such an all-optical homodyne distortion compensator is achieved by varying the phase and amplitude of the split copies until the resultant sum of the phases approached or reached a perfect pulse shape.

In general, such coherent addition of optical signals is very well known and is the fundamental principle for Mach Zehnder modulators. It is the particular application of restoring a signal by the use of more than two parallel delayed paths having variable amplitude and phase that is the basis for the teachings of the present invention.

The use of a semiconductor optical amplifier (SOA) is a specific implementation of the adaptive amplitude and phase controls 54 or 58. A standard SOA may be used to provide both phase and amplitude variations, the phase varying sinusoidally with current and the gain exponentially. Alternatively, the two functions may be performed with independent devices. The full list of appropriate devices is long, and well known, such as thermo-optic phase shifters applied to waveguides. A Coming PureGain100 SOA is suitable and is available from Coming Incoporated. However, the SOA is preferably not a gain clamped SOA but a SOA that can provide both phase and gain modulation.

Typically, for a standard SOA, the gain and phase would vary with bias current according to the following equation:

$$G = e^{\Gamma g(N-N_0)L - \alpha_D L}$$

$$\phi = \phi_0 + \frac{2\pi(\Gamma g(N-N_0) - \alpha_D)L}{\lambda}\alpha_L$$

where

G: Gain
$\lambda$: wavelength
$\Gamma$: Confinement factor
g: material gain per unit length
N: carrier density
$N_0$: equilibrium carrier density (also known as transparency carrier density)
$\alpha_D$: waveguide loss coefficient
L: amplifier length
$\alpha_L$: linewidth enhancement factor
$\varphi$: Optical phase
$\varphi_0$: phase offset

Hence, fine tuning of the phase portion related to a Pure-Gain 100 SOA (or a dilute-SOA) 58 is provided by the control over the bias currents. Thus, the phase modulator portion of the dilute-SOA has the phase portion fine-tuned via the bias current to give the fine-tuning of the phase term, instead of the larger phase tuning of delay lines.

Referring to FIG. 11, a schematic diagram of the all-optical homodyne distortion compensator in accordance with the invention is represented in a more general form. An optical pulse train is received, in a degraded form, at the input or fiber 51 and a splitter 52 divides it into a suitable number of fractions (as illustrated, eight fractions). If necessary or desired, an optical amplifier (not shown) could be inserted before the splitter 52 to maintain adequate amplitude. The splitter 52 may be a simple waveguide splitter/coupler, preferably a planar integrated one in view of the need for close control of path lengths, such as a planar silica 1 x8 passive splitter. Alternatively it might be of the kind based on parallel reflecting and partially-reflecting surfaces. One fraction, to be considered the original signal, is passed directly, or if desired *via* an optical amplifier 54A, to an interferometric adder 53, while each of the other fractions is passed to a respective member of an array 54 of semiconductor optical amplifiers (SOAs) and then to a respective phase modulator of array 55 before the fractions are all passed to the same interferometric adder 53. Optical path lengths from the splitter 52 to the adder 53 vary from one to another so that the respective fractions arrive at the adder 53 at different times; path length differences corresponding to appropriate delays, of the order of picoseconds, are easily achieved in planar integrated optical waveguides, simply by laying out the components appropriately and using sinuous waveguides where necessary.

The adder 53 may take the same form as the splitter 52, and the result of the summation performed by the adder 53 is taken as the output 56 of the apparatus. A fraction of the output is taken for analysis to an optimizer computer 57 which controls independently the gain of each SOA of the array 54 and the depth of phase modulation imposed by each of the phase modulators of the array 55 in order to obtain the optimum output pulse shape. For example, the algorithm of the computer 57 may determine and maximize eye-opening of the signal. It is a routine programming exercise to modify programs known for use with finite impulse response (FIR) filters to adjust phase as well as amplitude. Computation time is insignificant, because the types of distortion addressed by this invention are expected to change only on a time-scale of the order of an hour.

The optical amplifier 54A, if present, may be a variable one under the control of the optimizer computer 57, or may be fixed or pre-set.

In principle, the SOAs of the array 54 (and amplifier 54A, if applicable) could be replaced by fixed-gain amplifiers and variable attenuators, including modulators), or if the amplitude of the signal is sufficient, by variable attenuators alone, but this is less preferred.

The phase-modulators of the array 55 may be separate semiconductor devices (including in that expression SOA's) operated close to the band edge, or they could be waveguides adjustable by differences in temperature or electric field.

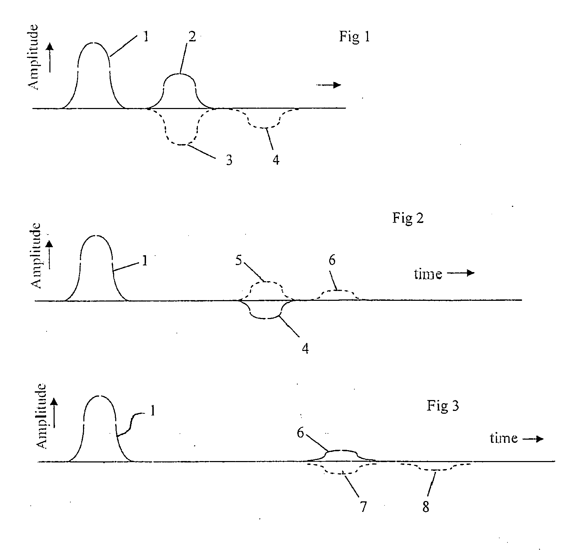

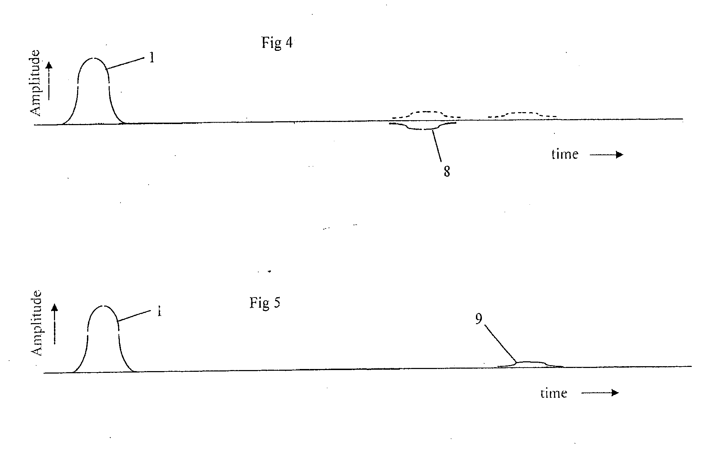

To clarify the mechanism of the invention, first consider a somewhat artificial example, illustrated by FIGS 1-4, in which each pulse 1 in the train is so distorted by a reflection as to produce a sub-pulse 2 (FIG 1, solid line) which is 3dB below the peak of the original pulse 1 (about half its height) and delayed by 10 ps, and in which the pulse length is so short that the subpulse 2 does not overlap with the main pulse 1. This distorted pulse train 1 and 2 is the modulated carrier signal that is received by the input fiber 51 of FIGS. 11 or 12. It is presumed that an undistorted signal at the output fiber 56 of FIGS. 11 or 12 would be made up of pulses of equal height and simple shape and that "optimization" may be defined as achieving the best approximation to that. In accordance with the invention (and considering a single pulse for simplicity), a first copy of the pulse 3 - and its subpulse 4 - is coherently added to the original pulse train of pulses 1 and 2 with a delay of 10 ps, a loss of 3 dB and an optical phase shift of π (FIG 1, dashed line) - in FIGS 1-5, a phase shift of π relative to the incoming signal is represented as a negative amplitude. This results in destructive interference by which the main pulse 3 of the copy and the sub-pulse 2 of the original signal are eliminated, but the sub-pulse 4 of the copy remains, with an amplitude 6 dB below the peak of the original signal, delayed 20 ps and phase-shifted by π, the main pulse 1 and the subpulse 4 being represented by the solid line in FIG. 2. Coherent addition of a second copy 5, 6 (FIG 2, dashed line) of the original pulse with a delay of 20 ps, a loss of 6 dB and a phase difference of 0 similarly eliminates the sub pulse 4 from the first copy, but leaves another subpulse 6 with a delay of 30 ps, a loss of 9 dB and the original phase (FIG 3, solid line). The process is repeated (FIGS. 4 and 5) until the residual pulse 9 is small enough for further processing to be unjustified, or until loss of coherence sets a limit (the coherence length of the incoming signal needs to be greater than the maximum path length difference, as the expert reader will readily understand).

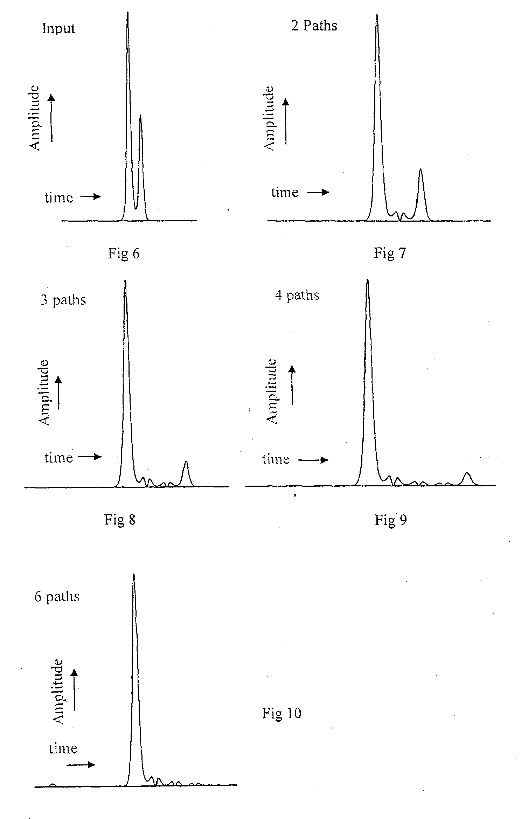

Next, consider what would happen if the offset of the distortion peak were 9 ps, all other parameters remaining the same. Again, the main pulse of the first copy would be added to the distortion peak and destroy most of it, just leaving a small residual distortion around the 9 ps position because the timing of the peaks fails to coincide exactly; the distortion peak of the first copy would be added in the 19 ps position and similarly reduced to a small residue in that position plus a smaller added peak at the 29 ps position, and so on. Thus the main peak is substantially reshaped, with the penalty of a small ripple. This illustration is indicative that it is beneficial to choose a delay increment corresponding to any periodicity that is known or expected to be present in the distortion of the incoming pulse train. FIGS 6-10 seek to illustrate this and at the same time to allow, more realistically, for the subpulse to overlap with the main pulse. FIG. 6 shows the distorted input pulse; FIG 7 the summation of the undelayed and once-delayed signal, without reference to phase (total two light paths); FIG. 8 the summation of the undelayed and the first two delayed signals; FIG. 9 the summation of the undelayed and the first three delayed signals; and FIG. 10 the summation of the undelayed and five delayed signals (total 6 light paths).

The foregoing artificial examples, while not impossible, were contrived by choosing a long uniform delay increment and a particular distortion so as to make the successive iterations of the process readily visible in the figures. In most (if not all) practical applications, the increment(s) will be shorter and the iterative changes will mostly be visible only as a small change in pulse shape. In most practical cases, it is recommended that the incremental time shift should be shorter, but no more than 10 times shorter, than the rise and fall times of the incoming signal to be processed.

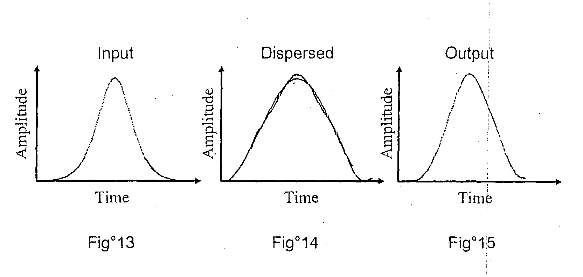

FIGS. 13-15 illustrate the use of the invention in a practical example using as input a 40Gbit/s signal degraded by chromatic dispersion alone to the onset of pulse overlap. FIG. 13 shows the original pulse shape and FIG. 14 the broadened pulse as so degraded at the input 51. Using the all-optical homodyne distortion compensator of FIGS. 11 and 12 (eight light paths), with a uniform delay increment of 3.125ps, the output pulse at output 56 was as shown in FIG. 15: not restored to its original shape, but usefully improved and in particular freed from the incipient risk of pulse overlap.

Up to now, the effect of chirp has been neglected. Because the invention depends on coherent addition of pulse trains, the presence of chirp, whether arising from chromatic dispersion or other causes, will be a limitation on its effectiveness. If it becomes desirable to counter this, the input pulse train may be substantially freed from chirp by using an intensity-dependent optical wavelength converter before it reaches the splitter. Several such converters are known in the art, for example from a paper by the applicant and others in Electronics Letters vol 34 no. 20 (1998) pages 1958-9 and a paper by Danielsen and others in the same periodical at vol 32 no. 18 (1996) page 1688-90, both of which are herein incorporated by reference.

It will be apparent from the discussion of FIGS 1-8 above that the improvement of pulse shape by the invention will usually be accompanied by the formation of an extended pulse tail of low but measurable intensity, and this will accumulate if the method of the invention is applied more than once. If necessary or desired, it may be alleviated by use of an interferometric wavelength converter or other intensity-discriminating device after the adder 53 (if the wavelength was previously converted, this may restore the original wavelength, if desired). The device of the Danielsen et al paper just referred to is suitable, as are the devices described in papers as follows (which are also incorporated herein by reference):

> Kelly et al, Electronics Letters vol 35 no. 17 (1999) pages 1477-8;
> Wolfson et al, IEEE Photonics Technology Letters vol 10 no.10 (1998) pages 1413-1415; and
> Khruschchev et al, Electronics Letters vol 35 no. 14 (1999) pages 1183-5.

When this is done, some degree of reduction in spontaneous noise will be achieved, broadly as in "2R" regenerating wavelength converters. This will usually leave timing jitter as the major remaining source of degradation, and that can be overcome, if justified, by using locally-generated clock pulses instead of a continuous wave light as input to the final wavelength converter. The added complexity may be justified by greater tolerance to input conditions, compared to a regenerator.

The all-optical homodyne distortion compensator is relatively inexpensive and compact, and so may be deployed at multiple positions in a transmission line, if the accumulation of distortions justifies it. For example, it may be located within an optical crossconnect or an add-drop multiplexer, as well as at the output end of a transmission line. It is not fundamentally dependent on the system bit-rate, but it is anticipated that in a wavelength-division multiplexed system it will be deployed at places where the channels are separate, as the gain and phase settings required are almost certain to vary from channel to channel.

It will be apparent to those skilled in the art that various modifications and variations can be made to the present invention without departing from the spirit and scope of the invention. Thus it is intended that the present invention cover the modifications and variations of this invention provided they come within the scope of the appended claims and their equivalents.

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was expressed in a printed publication, nor that it was available to the public or to experts in the art to which the invention relates in the US or in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. A method of mitigating the effect of deterministic pulse distortions along an optical fiber communications link transmitting a train of pulses which comprises, at at least one intermediate point of the link, making plural copies of said pulse train, delaying each said copy by a different amount, coherently adding said copies to said pulse train, and adjusting the amplitude and phase of each said copy to optimize the resulting pulse shape.

2. A method in accordance with claim 1 in which the lengths of the said delays are related by a constant increment.

3. A method in accordance with claim 2 in which said increment is less than the pulse length of the incoming pulse train.

4. A method as claimed in claim 2 in which said increment is at least 10% of said pulse length.

**5.** A method in accordance with claim 2 in which said increment is less than the rise and fall time of the incoming pulse train.

**6.** A method as claimed in claim 1 further comprising converting the optical wavelength of said pulse train before making said copies.

**7.** A method as claimed in claim 6 further comprising again converting the optical wavelength of said pulse train after making said copies.

**8.** A method as claimed in claim 1 further comprising converting the optical wavelength of said pulse train after coherently adding said copies.

**9.** A method as claimed in claim 6 comprising using locally-generated clock pulses as input for said wavelength converting.

**10.** An all-optical homodyne distortion compensator comprising:

an input optical fiber for receiving a modulated carrier signal having a distorted pulse train which resulted from propagation of the modulated carrier signal through an optical link;
a first plurality of beam steering elements and couplers for splitting the distorted pulse train of the modulated carrier signal into multiple fractions as copies for optical propagation;
a parallel array of adaptive amplitude and phase controls for providing adjustable amplitude and adjustable phase of each of the copies of the distorted modulated carrier signal;
a parallel configuration of incrementally delayed lines starting from an undelayed path for coupling the first plurality of beam steering elements and couplers to the parallel array of adaptive amplitude and phase controls, wherein the delayed lines have an increment time delay between the lines of at least 10% of the pulse length of the modulated carrier signal for incrementally delaying the amplitude adjustable and phase adjustable copies of the distorted pulse train of the modulated carrier;
a second plurality of beam steering elements and couplers
interferometrically combines the optical fields of the amplitude adjustable and phase adjustable delayed copies and the undelayed copy of the split distorted pulse train of the modulated carrier for providing an output signal;
a computer controlled by a frequency impulse response (FIR) algorithm chosen to optimize the pulse shape resulting from the optical field addition of the copies to the undelayed fraction of the pulse train of the modulated carrier by controlling the parrallel array of amplitude and phase elements in response to a feedback control portion of the output signal; and
an output fiber for coupling the output signal as a restored version of the modulated carrier signal with the optimized pulse shape having distortion mitigated.

**11.** The all-optical homodyne distortion compensator of claim 10, wherein the parallel array of adaptive amplitude and phase controls comprises a parallel array of individually addressable semiconductor optical amplifiers each having a gain and a phase section.

**12.** Apparatus for mitigating the effect of deterministic pulse distortions along an optical fiber communications link transmitting a train of pulses which comprises:

(a) a splitter array for separating said train of pulses into multiple fractions
(b) for each said fraction except one

(i) at least one amplitude adjusting means selected from the group consisting of variable optical amplifiers and variable optical attenuators and
(ii) phase adjusting means

to enable the production of respective copies of said train of pulses modified in amplitude and phase;
(c) an interferometric adder for coherently adding said copies to said one fraction, optical path lengths from said splitter to said interferometric adder being such that each said copy is delayed by a different length of time relative to said one fraction.

**13.** Apparatus in accordance with claim 12 in which said phase adjusting means is selected from the group consisting of thermo-optical and electro-optical phase shifters and modulators and electrically pumped semiconductor devices.

**14.** Apparatus in accordance with claim 12 further comprising a computer controlled by an algorithm chosen to optimize the pulse shape resulting from the addition of said copies to said one fraction.

**15.** Apparatus as claimed in claim 12 further comprising a wavelength converter for converting the optical wavelength of said pulse train.

**16.** Apparatus as claimed in claim 12 in which said splitter array is an integrated waveguide splitter/coupler.

**17.** Apparatus as claimed in claim 12 in which said interferometric adder is an integrated waveguide splitter/coupler.

18. An optical fiber communication link comprising an optical digital transmitter for generating a train of optical pulses, a receiver for said pulse train, at least one optical fiber connecting said transmitter to said receiver for conveying said pulse train and, for mitigating the effect of deterministic pulse distortions along said optical fiber communications link at least one apparatus which comprises:

    (a) a splitter array for separating said train of pulses into multiple fractions
    (b) for each said fraction except one

        (i) at least one amplitude adjusting means selected from the group consisting of variable optical amplifiers and variable optical attenuators and
        (ii) phase adjusting means

    to enable the production of respective copies of said train of pulses modified in amplitude and phase; and
    (c) an interferometric adder for coherently adding said copies to said one fraction, optical path lengths from said splitter to said interferometric device being such that each said copy is delayed by a different length of time relative to said one fraction.

19. An optical fiber link in accordance with claim 22 in which at least one said apparatus further comprises a computer controlled by an algorithm chosen to optimize the pulse shape resulting from the addition of said copies to said one fraction.

20. An optical fiber link in accordance with claim 22 in which at least one said apparatus further comprises a wavelength converter for converting the optical wavelength of said pulse train.

Fig 1

Fig 2

Fig 3

Input

Amplitude

time →

Fig 6

2 Paths

Amplitude

time →

Fig 7

3 paths

Amplitude

time →

Fig 8

4 paths

Amplitude

time →

Fig 9

6 paths

Amplitude

time →

Fig 10

FIG. 11

FIG. 12

Input

Fig°13

Dispersed

Fig°14

Output

Fig°15

**European Patent Office**

**EUROPEAN SEARCH REPORT**

Application Number

EP 05 07 5754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 067 180 A (ROBERTS ET AL) 23 May 2000 (2000-05-23)<br><br>* figures 1,3,6 *<br>* column 1, lines 11-14 *<br>* column 1, lines 27-36 *<br>* column 3, lines 17-31 *<br>* column 4, lines 28-44 *<br>* column 4, lines 62-65 *<br>* column 5, lines 9-11 *<br>* column 6, lines 23-25 *<br>* column 6, lines 52-59 *<br>* column 7, lines 20-22 *<br>* column 7, line 30 - column 8, line 13 * | 1-5, 9-14, 16-20 | H04B10/18 |
| Y | | 6-8,15, 20 | |
| X | US 6 411 417 B1 (ROBERTS KIM BRYON ET AL) 25 June 2002 (2002-06-25)<br><br>* figures 3,5,9 *<br>* column 1, lines 3,4 *<br>* column 4, lines 12-15 *<br>* column 6, lines 4-16 *<br>* column 6, lines 41-49 *<br>* column 6, lines 64-66 *<br>* column 8, lines 14-32 *<br>* column 9, lines 31-34 * | 1,2, 9-14, 16-19 | TECHNICAL FIELDS SEARCHED (IPC)<br><br>H04B |
| A | | 3-8,15, 20 | |

-/--

The present search report has been drawn up for all claims

| Place of search | Date of completion of the search | Examiner |
|---|---|---|
| Munich | 9 December 2005 | Petitit, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 05 07 5754

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | IDLER W; SCHILLING M; DAUB K; LACH E; LAUBE G; KOERNER U; BAUMS D; WUNSTEL K: "Compact monolithic wavelength converter with strong signal improvement including chirp compression" 21ST EUROPEAN CONFERENCE ON OPTICAL COMMUNICATION ECOC'95, vol. 2, 21 September 1995 (1995-09-21), pages 621-624, XP009058369 * title * * page 622, paragraph 2 * ----- | 6-8,15, 20 | |
| X | US 2003/072517 A1 (GLINGENER CHRISTOPH) 17 April 2003 (2003-04-17) * figure 1 * * paragraph [0001] * * paragraph [0008] * * paragraph [0015] * * paragraph [0022] * * paragraph [0024] * | 1,2, 9-14, 16-19 | |
| A | ----- | 3-8,15, 20 | TECHNICAL FIELDS SEARCHED (IPC) |

The present search report has been drawn up for all claims

| Place of search | Date of completion of the search | Examiner |
|---|---|---|
| Munich | 9 December 2005 | Petitit, N |

**EP 1 708 390 A1**

## ANNEX TO THE EUROPEAN SEARCH REPORT
## ON EUROPEAN PATENT APPLICATION NO.

EP 05 07 5754

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2005

| Patent document cited in search report | | | Publication date | Patent family member(s) | | Publication date |
|---|---|---|---|---|---|---|
| US 6067180 | A | | 23-05-2000 | NONE | | |
| US 6411417 | B1 | | 25-06-2002 | NONE | | |
| US 2003072517 | A1 | | 17-04-2003 | DE 10147169 A1 | | 30-04-2003 |
| | | | | EP 1296472 A2 | | 26-03-2003 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Electronics Letters,* 1998, vol. 34 (20), 1958-9
- **DANIELSEN.** *same periodical,* 1996, vol. 32 (18), 1688-90
- **KELLY et al.** *Electronics Letters,* 1999, vol. 35 (17), 1477-8
- **WOLFSON et al.** *IEEE Photonics Technology Letters,* 1998, vol. 10 (10), 1413-1415
- **KHRUSCHCHEV et al.** *Electronics Letters,* 1999, vol. 35 (14), 1183-5